# EUROPÄISCHE PATENTSCHRIFT

(11) **EP 2 116 418 B1**
(45) Veröffentlichungstag und Bekanntmachung des Hinweises auf die Patenterteilung: **03.08.2016**
(21) Anmeldenummer: 08103907.5
(22) Anmeldetag: 09.05.2008
(51) Int. Cl.: B60P 3/05, B60P 7/06

(54) **Kofferaufbau mit einer Montagevorrichtung zur Montage einer Zusatzeinrichtung**
Box body with a mounting device for mounting an additional device
Structure de coffre dotée d'un dispositif de montage destiné au montage d'un dispositif supplémentaire

(43) Veröffentlichungstag der Anmeldung: 11.11.2009
(73) Patentinhaber: Schmitz Cargobull AG, 48341 Altenberge (DE)
(72) Erfinder: Beelmann, Reinhard, Dipl.- Ing., 45721 Haltern am See (DE); Heßling, Alfons, 48683 Ahaus (DE); Küpers, Josef, 48703 Stadtlohn (DE)
(74) Vertreter: Cohausz & Florack

(56) Entgegenhaltungen:
- DE-U- 7 117 450
- US-A- 4 302 913
- US-A1- 2002 048 495
- US-A1- 2005 175 426
- US-A1- 2006 222 455

## Beschreibung

Die Erfindung betrifft einen Kofferaufbau eines Lastkraftwagens, Aufliegers und/oder Anhängers, mit einem Dachpaneel und wenigstens einer Montagevorrichtung zur Montage einer Zusatzeinrichtung am Dachpaneel. US 4,302,913 offenbart den Oberbegriff des Anspruchs 1.

Kofferaufbauten mit Zusatzeinrichtungen, die über entsprechende Montagevorrichtungen an einem Dachpaneel befestigt sind, befinden sich schon seit langem im praktischen Einsatz. Insbesondere handelt es sich dabei um Kofferaufbauten mit an dem Dachpaneel montierten Fleichhangsystemen, Deckenverdampfern oder dergleichen. Die eigentlichen Zusatzeinrichtungen sind dabei mit speziellen Montagevorrichtungen am Dachpaneel montiert. Die Montagevorrichtungen stellen in diesem Zusammenhang eine Art Adapter oder Zwischenstück dar, das einerseits die Zusatzeinrichtung als solche trägt und andererseits die Verbindung zum Dachpaneel herstellt.

Bei den bekannten Kofferaufbauten umfassen die Montagevorrichtungen Schrauben, die mit Verstärkungsprofilen innerhalb des Dachpaneels zum Aufnehmen der Traglast der Zusatzeinrichtungen verschraubt sind. Eine derartige Montage ist notwendig, damit die Traglast vom Dachpaneel aufgenommen werden kann. Allerdings ist die Montage schwierig und zeitaufwändig, zumal die Montage von größeren Zusatzeinrichtungen, wie Fleischhangsystemen, eine Vielzahl von Montagepunkten und damit Verschraubungen erforderlich macht.

Somit liegt der vorliegenden Erfindung die Aufgabe zu Grunde, einen Kofferaufbau derart auszugestalten und weiterzubilden, dass eine Zusatzeinrichtung über eine Montageeinrichtung einfacher und schneller am Dachpaneel montiert werden kann.

Diese Aufgabe ist gelöst durch den Kofferaufbau nach Anspruchs 1.

Die Erfindung hat demnach erkannt, dass es einfacher, schneller und kostengünstiger ist, zunächst wenigstens eine Schiene in das Dachpaneel einzulassen, um dann in der Schiene die Montagevorrichtungen für die eigentlichen Zusatzeinrichtungen zu montieren. Bisher wurden entsprechende Schienen lediglich in Seitenwandpaneelen eingelassen, die dann als Doppelstockschienen oder Ladungssicherungsschienen Verwendung fanden. Schienen wurden bisher also dann eingesetzt, wenn eine Montage nur kurzzeitig in einer Position erwünscht und ein häufiger Wechsel zwischen verschiedenen Montagepositionen erforderlich gewesen ist. Überraschend hat sich jedoch herausgestellt, dass die Montage von Schienen im Dachpaneel auch für die Montage von Zusatzeinrichtungen effektiv genutzt werden kann, obwohl am Dachpaneel anzubringende Zusatzeinrichtungen, wie Fleischhangsysteme, Deckenverdampfer oder dergleichen, dauerhaft also im Wesentlichen für die gesamte Nutzungsdauer des Kofferaufbaus unverändert montiert bleiben.

Das Einlassen der Schiene in das Dachpaneel hat weitere fertigungstechnische Vorteile. Es muss dann nämlich nicht zunächst ein Paneel hergestellt werden, das anschließend erst mit einer Schiene ausgerüstet wird. Dies erfolgt insbesondere durch Verschrauben der Schiene am Dachpaneel. Erst danach kann dann die Montagevorrichtung in der Schiene und damit die Zusatzeinrichtung am Dachpaneel angebracht werden. Eine Vereinfachung der Montage insgesamt ergäbe sich dadurch nicht.

Nach einer ersten Ausgestaltung des Kofferaufbaus ist die Zusatzeinrichtung eine Hängevorrichtung, an und/oder auf der Güter zum hängenden Transport auf- und/oder angehängt werden können. Eine solche Hängevorrichtung kann vorzugsweise ein Fleischhangsystem sein, an dem vornehmlich Schweine- und/oder Rinderhälften aufgehängt werden. Alternativ kommen noch andere Zusatzeinrichtungen in Frage, wie etwa ein Deckenverdampfer oder eine Trennwand zum Unterteilen des Laderaums des Kofferaufbaus in unterschiedliche Segmente.

Alternativ oder zusätzlich ist die Schiene bündig in das Dachpaneel eingelassen. Auf diese Weise wird die effektive Ladehöhe des Kofferaufbaus durch die Schiene nicht reduziert. Zudem kann die Verbindung zwischen der Schiene und dem Dachpaneel stabiler ausgebildet werden, so dass an die Schiene größere Lasten angehangen werden können.

Die Schiene weist eine Nut auf und die Montagevorrichtung ist über einen in diese eingreifenden Nutenstein montiert. Dadurch wird ein hohes Maß an Flexibilität erreicht. An einem immer gleichen Dachpaneel können dann je nach Bedarf unterschiedliche Montagevorrichtungen, insbesondere verschiedene Zusatzeinrichtungen, montiert werden.

In diesem Zusammenhang ist es zweckmäßig, dass die Schiene eine zur Innenseite des Kofferaufbaus geöffnete T-Nut aufweist. Vorzugsweise ist die Schiene dann selbst als im Wesentlichen C-förmiges Profil ausgebildet. Der Nutenstein kann dann ohne weiteres, vorausgesetzt er ist entsprechend geformt, entlang der gesamten Schiene verschoben werden. Außerdem stellt dies eine aus konstruktiver Sicht insgesamt einfache Ausgestaltung dar.

Bei einer besonders bevorzugten Ausgestaltung des Kofferaufbaus ist der Nutenstein in Längsrichtung länger als die Öffnungsweite der T-Nut und in Querrichtung schmaler als die Öffnungsweite der T-Nut. Der Nutenstein hat also eine längere Längsrichtung und eine kürzere Querrichtung, was ein Einführen des Nutensteins und damit das Anbringen der Montagevorrichtung an jeder beliebigen Stelle der Schiene gestattet. Ein Einfädeln von Nutensteinen an einem Ende der Schiene und Verschieben der Nutensteine zu der gewünschten Position der Montagevorrichtung entlang der Schiene ist damit entbehrlich. Stattdessen können die Nutensteine in einer Ausrichtung im Wesentlichen parallel zur Schiene senkrecht in deren T-Nut eingeführt werden.

Die Ausgestaltung der Nutensteine erlaubt zudem, diese an jeder beliebigen Stelle der Schiene aus der T-Nut herauszunehmen. Hierzu ist es lediglich erforderlich, die Längsrichtung der Nutensteine parallel zur Längserstreckung der Schiene und damit der Öffnung der T-Nut auszurichten. Da der Nutenstein in Querrichtung schmaler ist als die Öffnungsweite der T-Nut, kann der Nutenstein sodann senkrecht aus der Schiene herausgezogen werden.

Anschließend kann bei gleicher Ausrichtung des wenigstens einen Nutensteins die Montagevorrichtung an jedem beliebigen Punkt der Schiene wieder senkrecht zur T-Nut in die Schiene eingeführt und dort erneut befestigt werden. Im Ergebnis ermöglicht also diese Ausgestaltung des Nutensteins ein rasches und unkompliziertes Austauschen einer bestimmten Zusatzeinrichtung durch eine andere. Ist eine veränderte Nutzung des Kofferaufbaus vorgesehen, so kann hierauf schnell und kostengünstig reagiert werden, indem vorhandene Zusatzeinrichtungen durch für die neue Nutzung besser geeignete Zusatzeinrichtungen ersetzt werden.

Dazu muss lediglich der Nutenstein bzw. müssen lediglich die Nutensteine der Montagevorrichtung in eine Ausrichtung gebracht werden, in der die Längsrichtung der Nutensteine parallel zur T-Nut der entsprechenden Schiene ist. Anschließend kann die Montagevorrichtung und damit die mit der Montagevorrichtung befestigte Zusatzeinrichtung entfernt werden. Soll nun eine andere Zusatzeinrichtung montiert werden, so ist diese wiederum mit einer Montagevorrichtung zu versehen, deren Nutensteine längs zur Längserstreckung der Schiene ausgerichtet werden. In dieser Ausrichtung lassen sich die Nutensteine senkrecht auf die Schiene aufstecken. Anschließend muss lediglich eine Verriegelung der Nutensteine in der Schiene erfolgen, um die Zusatzeinrichtung zu fixieren.

Die Montagevorrichtung kann dabei formschlüssig in der T-Nut gehalten werden, wenn der wenigstens eine Nutenstein nach dem Einbringen in die T-Nut in eine Ausrichtung quer zur Längserstreckung der Schiene gedreht wird. In der Stellung quer zur Längserstreckung der Schiene ist der Nutenstein länger als die Öffnungsweite der T-Nut und kann daher nicht mehr ohne weiteres senkrecht zur Schiene herausgezogen werden. Wenn der wenigstens eine Nutenstein in der entsprechenden Stellung zusätzlich beispielsweise in eine Aussparung der Schiene eingreift, so kann der Nutenstein auch in einer Richtung parallel zur Schiene gehalten werden.

Im Kofferaufbau können je nach Art und Größe der zu montierenden Zusatzeinrichtung eine Montagevorrichtung oder mehrere Montagevorrichtungen vorgesehen sein. Dabei kann die Zusatzeinrichtung nach ihrer Art und Größe die Montage in einer Schiene oder in mehreren Schienen erforderlich machen. Gleichsam besteht die Möglichkeit, eine Montagevorrichtung nur mit einem einzigen Nutenstein oder mit mehreren Nutensteinen in eine Schiene zu montieren. Der besseren Verständlichkeit halber wird im Zusammenhang mit der Beschreibung der vorliegenden Erfindung immer dann, wenn lediglich von einer Montagevorrichtung, einer Schiene und/oder einem Nutenstein die Rede ist, von wenigstens einer Montagevorrichtung, wenigstens einer Schiene und/oder wenigstens einem Nutenstein ausgegangen, so lange sich aus dem jeweiligen Kontext nichts anderes ergibt. Dementsprechend ist es ebenfalls nicht beschränkend auszulegen, wenn vorliegend explizit von einer Mehrzahl von Montagevorrichtungen, einer Mehrzahl von Schienen und/oder einer Mehrzahl von Nutensteinen die Rede ist, so lange die jeweilige Beschreibung auch einen beispielhaften Charakter aufweist.

Im Zusammenhang mit dem Nutenstein, der in einer ersten Richtung schmaler als die Öffnungsweite der Schiene und in einer zweiten Richtung länger als die Öffnungsweite der Schiene ist, ist die Anwendung nicht auf ein Dachpaneel begrenzt. Es ist auch denkbar, dass anstelle des Dachpaneels die Schiene in einem Seitenwandpaneel des Kofferaufbaus, bedarfsweise auch in einem Stirnwandpaneel, Bodenpaneel oder dergleichen, eingelassen ist, wobei die Schiene nicht zwingend aber bevorzugt bündig eingelassen ist. Die Montagevorrichtung ist dann zur Montage einer Zusatzeinrichtung am Seitenwandpaneel in der Schiene montiert. In diesem Zusammenhang handelt es sich bei den Zusatzeinrichtungen weniger um Fleischhangsysteme und Deckenverdampfer, als vielmehr um sogenannte Doppelstockträger oder Ladungssicherungsmittel, wie Spanngurte und dergleichen. Die Doppelstockträger erstrecken sich dabei vorzugsweise von einem Seitenwandpaneel zum gegenüberliegenden Seitenwandpaneel, so dass vorzugsweise an beiden Seitenwandpaneelen etwa auf gleicher Höhe sowohl in vertikaler Richtung als auch in Längsrichtung des Kofferaufbaus korrespondierende Schienen vorgesehen sind. Auf die Doppelstockträger, die insbesondere horizontal montiert werden, können dann Paletten oder dergleichen aufgestellt werden. Die Doppelstockträger dienen also dem Einziehen wenigstens eines zusätzlichen Stockwerks in den Laderaum des Kofferaufbaus.

Auch für die folgenden Ausgestaltungsvarianten ist, auch wenn diese nachfolgend insbesondere für ein Dachpaneel beschrieben werden, deren Anwendung auf ein Seitenwandpaneel, bedarfsweise auch ein Stirnwand oder Bodenpaneel des Kofferaufbaus alternativ oder zusätzlich möglich.

Eine formschlüssige Verbindung zwischen der Montagevorrichtung und der Schiene kann nicht immer verhindern, dass sich der Nutenstein und/oder die Montagevorrichtung ungewollt entlang der Schiene verschiebt. Bein dem Kofferaufbau ist vorgesehen, dass die wenigstens eine Montagevorrichtung reibschlüssig längs der wenigstens einen Schiene in der T-Nut gehalten ist. Dies wird vorzugsweise durch Verkeilen des Nutensteins in der T-Nut erreicht. Zur Vereinfachung der Montage des wenigstens einen Nutensteins bzw. der wenigstens einen Montagevorrichtung weist der wenigstens eine Nutenstein in der Ebene der T-Nut wenigstens eine Abrundung auf. Die wenigstens eine Abrundung definiert dann eine Anlagefläche zur Anlage an einer inneren Flanke der T-Nut. Diese innere Flanke verläuft vorzugsweise schräg oder in etwa gar senkrecht zu einer durch die Schiene definierten Ebene. Durch die Abrundung und das Zusammenwirken von Anlagefläche und innerer Flanke der T-Nut wird sichergestellt, dass die Nutensteine in der T-Nut keine vollständige Umdrehung vollziehen können. Nachdem ein gewisser Drehwinkel erreicht ist, gelangt die Anlagefläche zur Anlage an der inneren Flanke und ein weiteres Verdrehen des Nutensteins in die gleiche Drehrichtung wird unterbunden. Darüber hinaus führt die Abrundung des Nutensteins dazu, dass der Nutenstein mit einer breiteren Fläche auf den die Öffnungsweite der T-Nut begrenzenden Rippen der Schiene aufliegt. Dies führt letztlich zu einer vergleichmäßigten Krafteinleitung in die Schiene.

Die Anlagefläche der wenigstens einen Abrundung erlaubt bedarfsweise eine reibschlüssige Anlage des Nutensteins an der inneren Flanke der T-Nut. Dadurch lässt sich erreichen, dass beim Verdrehen des Nutensteins in der T-Nut der Nutenstein nach einem vorbestimmten Drehwinkel an der inneren Flanke der T-Nut in Anlage gelangt und dabei über Reibschluss derart fixiert wird, dass ein unbeabsichtigtes Zurückdrehen des Nutensteins verhindert wird. Ein Lösen des Nutensteins aus der T-Nut wird auf diese Weise sicher verhindert. Dabei kann der Reibschluss umso ausgeprägter sein, je größer die an der inneren Flanke anliegende Fläche des Nutensteins ausgebildet ist.

Eine Vergleichmäßigung der Krafteinleitung des Nutensteins sowie eine Verstärkung des Reibschlusses zwischen Nutenstein und Schiene, wird dadurch erreicht, dass der Nutenstein zwei diagonal gegenüberliegende Abrundungen aufweist, wobei an jeder Abrundung eine Anlagefläche zur reibschlüssigen Anlage an einer inneren Flanke der T-Nut vorgesehen ist.

Zusätzlich kann der Nutenstein in Auszugsrichtung aus der T-Nut der wenigstens einen Schiene federbelastet sein. Dadurch springt der Nutenstein vorzugsweise aus der T-Nut heraus, sobald der Nutenstein parallel zur Längserstreckung der Schiene angeordnet ist. Wenn der Nutenstein infolge der Federkraft nicht vollständig aus der Öffnung der T-Nut herausgedrückt oder herausgezogen wird, weist der Nutenstein vorzugsweise eine entsprechende Kontur auf, die in der Auszugsstellung des Nutensteins längs zur Schiene infolge der Federkraft relativ zur Schiene in die Öffnung der T-Nut zwischen den Rippen der Schiene oder einer weiteren geeigneten Struktur eingreift und so ein weiteres Verdrehen des Nutensteins verhindert. Die Federbelastung des Nutensteins führt im Ergebnis vorzugsweise dazu, dass es beim Lösen des Nutensteins nicht zu einer Überdrehung desselben kommt. Das bedeutet, dass der Nutenstein nicht weiter gedreht wird, als bis zu einer Ausrichtung des Nutensteins parallel zur Längserstreckung der Schiene, so dass der Nutenstein senkrecht aus der Schiene entnommen werden kann. Auf diese Weise wird das Entnehmen einer Montagevorrichtung aus der wenigstens einen Schiene und damit das Abmontieren von Montagevorrichtungen bzw. Zusatzeinrichtungen wesentlich vereinfacht.

Alternativ oder zusätzlich kann zur Erzielung des gleichen Effekts der Nutenstein wenigstens eine mit der Schiene zusammenwirkende Anschlagfläche zum Begrenzen der Drehung des Nutensteins beim Lösen der Montagevorrichtung in einer Stellung aufweisen, in der der Nutenstein im Wesentlichen längs zur T-Nut ausgerichtet ist. Durch die Anschlagfläche am Nutenstein, die beim Verdrehen an die Schiene, vorzugsweise an wenigstens einer der die Öffnung der T-Nut begrenzenden Rippen, anschlägt, wird ein Überdrehen des Nutensteins verhindert. Durch den sich ergebenden Widerstand beim Verdrehen des Nutensteins weiß der Bediener, dass er den Nutenstein in dieser Stellung aus der Schiene herausziehen kann.

Zum Etablieren einer kraftschlüssigen Verbindung zwischen Montagevorrichtung und Schiene kann die Montagevorrichtung einen Gewindeabschnitt und ein auf den Gewindeabschnitt aufgeschraubtes Verspannmittel, etwa in Form einer Kontermutter, aufweisen. Die Montagevorrichtung ist dabei beispielsweise derart ausgebildet, dass ein Anziehen des Verspannmittels auf dem Gewindeabschnitt zu einem Abstützen der Montagevorrichtung gegenüber dem die Schiene aufweisenden Paneel führt. Bei einer besonderen Ausgestaltung wird sich die Montagevorrichtung gegenüber der Schiene selbst abstützen, da die Schiene gegenüber dem übrigen Paneel vorzugsweise eine höhere Steifigkeit aufweist.

Wenn mehrere Zusatzeinrichtungen befestigt werden müssen oder wenn die zu befestigenden Zusatzeinrichtungen verhältnismäßig groß sind, kann eine einzige Schiene nicht mehr für die Montage ausreichen. In diesem Zusammenhang ist es bevorzugt, wenn eine Mehrzahl von Schienen im Dachpaneel vorgesehen wird. Weiter bevorzugt ist es dabei, wenn die Schienen quer zum Dachpaneel ausgerichtet sind, was grundsätzlich auch bei einer einzigen Schiene vorteilhaft ist. In diesem Falle können sich über einen Großteil der Längserstreckung des Kofferaufbaus erstreckende Zusatzeinrichtungen, wie beispielsweise Fleischhangsysteme, besser und variabler montiert werden. Dies gilt insbesondere bei Montage der Zusatzeinrichtungen in einer Mehrzahl quer zum Kofferaufbau ausgerichteter, in Längsrichtung desselben beabstandeter Schienen.

Im Zusammenhang mit Fleischhangsystemen ergibt sich in Kombination mit Nutensteinen, die eine Längsrichtung mit einer Länge größer als die Öffnungsweite der Schiene und einer Quererstreckung mit einer Breite schmaler als die Öffnungsweite der Schiene aufweisen, ein besonderer Vorteil. Denn derzeit werden am Markt unterschiedliche Fleischhangsysteme mit unterschiedlichen Abmessungen verwendet. Sollte es wünschenswert sein, den Kofferbau mit einem Fleischhangsystem weiter zu betreiben, der sich von dem bereits montierten Fleischhangsystem unterscheidet, so ist ein Wechsel der Fleischhangsysteme ohne weiteres möglich. Dies war bislang, insbesondere auch wegen der Größe der Fleischhangsysteme, nicht ohne weiteres möglich. Gleiches gilt grundsätzlich auch für andere Zusatzeinrichtungen.

Nachfolgend wird die Erfindung anhand einer lediglich Ausführungsbeispiele darstellenden Zeichnung näher erläutert. In der Zeichnung zeigt
- Fig. 1: einen LKW mit einem auf einem Auflieger angeordneten ersten Ausführungsbeispiel des erfindungsgemäßen Kofferaufbaus mit im Dachpaneel eingelassenen Schienen,
- Fig. 2: ein Detail des Dachpaneels aus Fig. 1 in einer Schnittansicht entlang des Schnitts II-II aus Fig. 1 mit einem längs zur Schiene ausgerichteten Nutenstein,
- Fig. 3: das Detail aus Fig. 2 mit dem Nutenstein in einer quer zur Schiene ausgerichteten Stellung,
- Fig. 4: das Detail eines zweiten Ausführungsbeispiels des erfindungsgemäßen Kofferaufbaus in einer Ansicht gemäß Fig. 2,
- Fig. 5: das Detail des Kofferaufbaus aus Fig. 4 in einer Ansicht gemäß Fig. 3,
- Fig. 6: ein Detail eines Dachpaneels eines dritten Ausführungsbeispiels des erfindungsgemäßen Kofferaufbaus in einem vertikalen Schnitt quer zur Schiene,
- Fig. 7: ein Detail eines Dachpaneels eines vierten Ausführungsbeispiels des erfindungsgemäßen Kofferaufbaus in einem vertikalen Schnitt quer zur Schiene und
- Fig. 8: ein Detail eines fünften Ausführungsbeispiels des erfindungsgemäßen Kofferaufbaus im Bereich eines mit einem Fleischhangsystem ausgerüsteten Dachpaneels in einem vertikalen Schnitt quer zur Schiene.

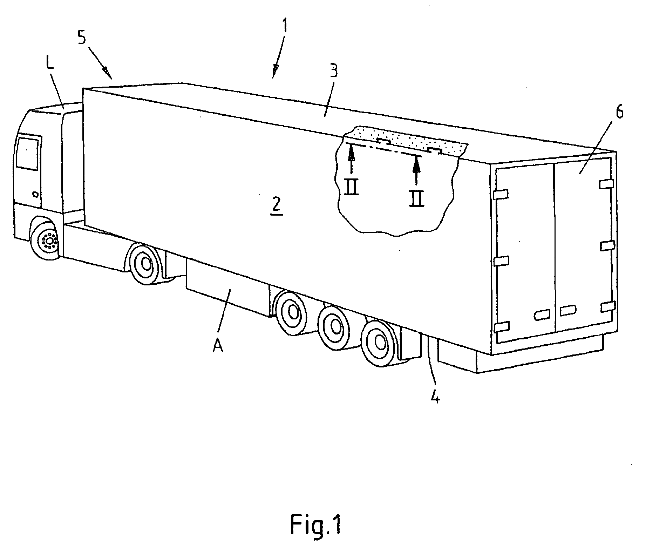

In der Fig. 1 ist ein Lastkraftwagen L mit einem Auflieger A dargestellt, der einen Kofferaufbau 1 trägt. Der Kofferaufbau 1 ist aus zwei Seitenwandpaneelen 2, einem Dachpaneel 3, einem Bodenpaneel 4 sowie einer Stirnwand 5 und einer Rückwand 6 zusammengesetzt und könnte alternativ auch direkt auf einem Lastkraftwagen oder einem gewöhnlichen Anhänger für einen Lastkraftwagen montiert sein. Zudem müssen die Seitenwandpaneele, das Dachpaneel und das Bodenpaneel nicht als mehrschichtige oder mehrlagige Paneele ausgebildet sein, obwohl das Einbringen eines geschäumten Kunststoffmaterials zwischen zwei Decklagen zur Isolation und Stabilisierung des Paneels bevorzugt ist. Ein Paneel im Sinne der Erfindung könnte daher bedarfsweise auch massiv ausgebildet sein.

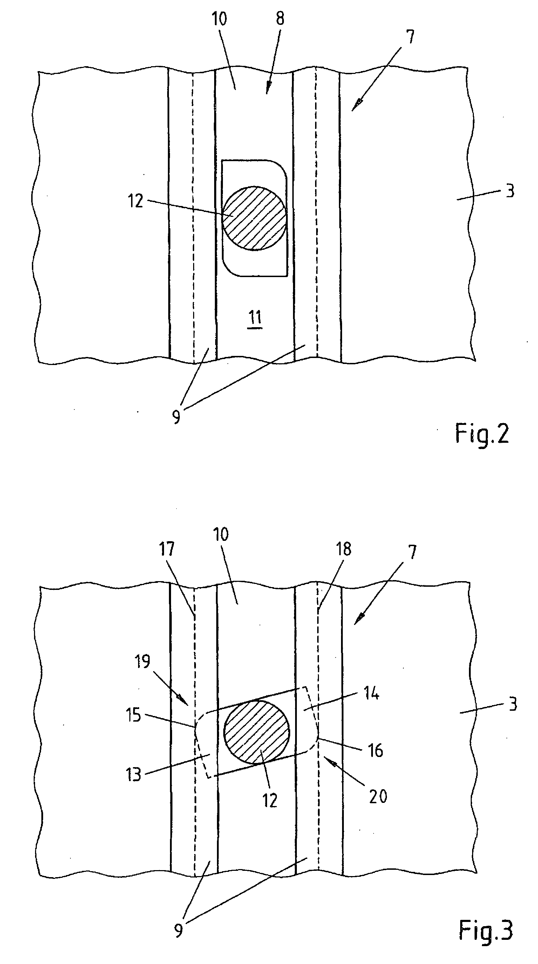

In der Fig. 2 ist eine Draufsicht auf ein Detail einer im Dachpaneel 3 eingelassenen Schiene 7 dargestellt. Die Schiene 7 weist eine Öffnung 8 auf, deren Öffnungsweite senkrecht zur Längserstreckung der Schiene 7 durch zwei gegenüberliegende und parallel zur Ebene der Schiene 7 ausgebildete Rippen 9 der Schiene 7 begrenzt ist. Dadurch ist die von der Schiene 7 gebildete Nut 10 zwischen den Rippen 9 schmaler als in der eigentlichen Nut der Schiene bzw. an dessen Nutgrund 11. Durch den sich dadurch ergebenden Querschnitt der Nut der Schiene werden derartige Nuten auch als T-Nuten bezeichnet.

In die in der Fig. 2 dargestellte T-Nut ist ein Nutenstein 12 einer Montagevorrichtung eingebracht, wobei die Montageeinrichtung der besseren Übersichtlichkeit halber infolge des Schnitts unmittelbar unterhalb der Schiene nicht im Einzelnen dargestellt ist. Der Nutenstein 12 parallel zur Schiene 7 ist länger als in einer Richtung quer zu dieser. Mit anderen Worten ist also die Erstreckung des Nutensteins 12 in Längsrichtung größer als dessen Quererstreckung jeweils in einer durch die Schiene 7 definierten Ebene. Darüber hinaus ist die Quererstreckung des Nutensteins 12 geringer als die Öffnungsweite der Schiene 7 zwischen den beiden einander gegenüberliegenden Rippen 9. Der Nutenstein 12 kann also in der in der Fig. 2 dargestellten Ausrichtung senkrecht zur Zeichenebene ohne weiteres in die Schiene 7 eingeführt und aus der Schiene 7 herausgezogen werden.

In der Fig. 3 ist derselbe Abschnitt des Dachpaneels 3 dargestellt wie in der Fig. 2. Der einzige Unterschied besteht darin, dass der Nutenstein 12 nach rechts gedreht worden ist. Die Längserstreckung des Nutensteins 12 verläuft nun schräg zur Längserstreckung der Schiene 7, so dass zwei äußere Abschnitte 13,14 des Nutensteins 12 die Rippen 9 hintergreifen, so dass der Nutenstein 12 nicht mehr senkrecht aus der dargestellten Schiene 7 herausfallen oder herausgezogen werden kann. Mit anderen Worten bildet der Nutenstein 12 mit der dargestellten Schiene 7 einen Formschluss.

Der in der Fig. 3 dargestellte und insoweit bevorzugte Nutenstein 12 kann nicht beliebig weit nach rechts gedreht werden. In der dargestellten Stellung liegt der Nutenstein 12 mit zwei Anlageflächen 15,16 an den gegenüberliegenden, die Nut 10 seitlich begrenzenden Flanken 17,18'an. Jede der beiden Anlageflächen 15,16 des Nutensteins 12 befindet sich im Bereich einer Abrundung 19,20 in einem Eckbereich des Nutensteins 12. Die beiden Abrundungen 19,20 des Nutensteins 12 sind diagonal gegenüber angeordnet. Die Anlageflächen 15,16 sind dabei derart ausgebildet, dass sich zwischen den Anlageflächen 15,16 und den Flanken 17,18 der T-Nut 10 eine möglichst stabile, reibschlüssige Verbindung herstellen lässt.

Auf diese Weise soll ein unbeabsichtigtes Zurückdrehen des Nutensteins 12 verhindert werden, so dass der Nutenstein 12 nicht unbeabsichtigt außer Eingriff mit der Schiene 7 gelangen kann. Durch die reibschlüssige Verbindung wird zudem ein unbeabsichtigtes Verschieben des Nutensteins 12 in Längserstreckung der Schiene 7 verhindert. In Richtung senkrecht zur Ebene des Dachpaneels 3 ist der Nutenstein 12 ohnehin formschlüssig gehalten.

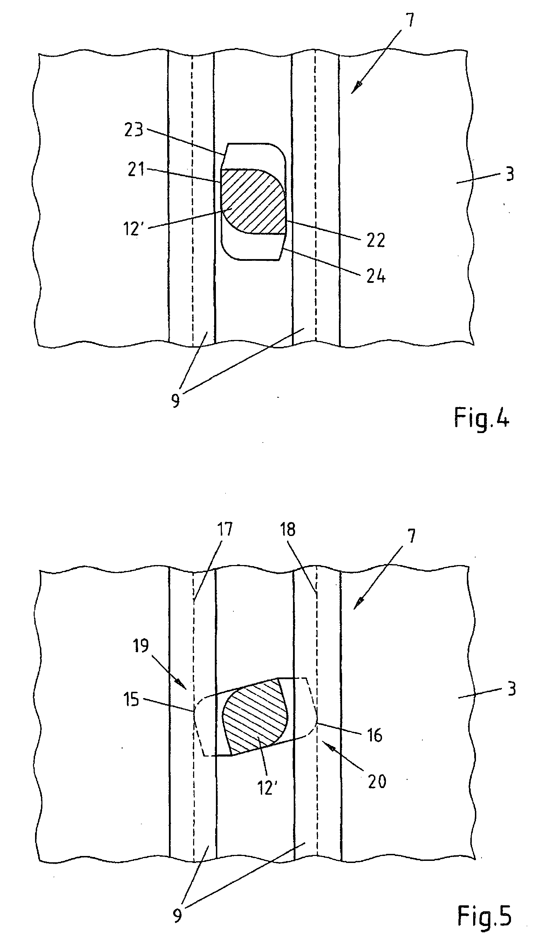

Bei einem weiteren in den Fig. 4 und 5 dargestellten Ausführungsbeispiel sind zusätzlich zwei Anschlagflächen 21,22 vorgesehen. Diese Anschlagflächen 21,22 gelangen in Anlage mit den hervorstehenden Rippen 9 der Schiene 7, wenn die Längsrichtung des Nutensteins 12' etwa parallel zur Längsrichtung der Schiene 7 ausgerichtet ist. Auf diese Weise wird das Herausnehmen des Nutensteins 12' sowie der gesamten Montagevorrichtung erleichtert. Der Nutenstein 12' muss lediglich aus der in der Fig. 5 dargestellten Stellung nach links gedreht werden, bis der Nutenstein etwa die in der Fig. 4 dargestellte Ausrichtung einnimmt, in der die Anschlagflächen an die gegenüberliegenden Rippen 9 der Schiene 7 anschlagen. Ein "Überdrehen" des Nutensteins 12' ist auf diese Weise unmöglich. Der Benutzer kann, ohne sich Gedanken über den Grad der Verdrehung zu machen, den Nutenstein 12' und damit die Montagevorrichtung sicher aus der Schiene 7 entfernen.

Der dargestellte und insoweit bevorzugte Nutenstein 12' weist an jeweils einer Seite zweier Eckbereiche eine Abschrägung 23,24 auf. Die Abschrägungen 23,24, die diagonal zueinander und an den nicht abgerundeten Eckbereichen vorgesehen sind, verringern die Gefahr eines unbeabsichtigten Formschlusses in der gelösten Stellung des Nutensteins 12' durch Eckbereiche außerhalb der Abschrägungen 23,24. Ähnlich wie bei den Abrundungen 15,16 würde auch bei den Abschrägungen 23,24 eine einzige grundsätzlich ausreichen. Die Anordnung diagonal gegenüber ist jedoch bevorzugt.

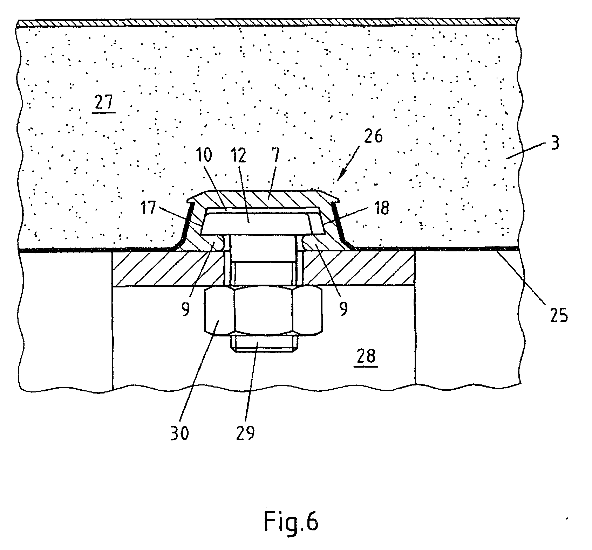

In der Fig. 6 ist ein Detail eines vertikalen Schnittes durch das Dachpaneel 3 im Bereich der Schiene 7 dargestellt. Die Schiene 7 ist bündig im Dachpaneel 3 eingelassen und formschlüssig mit einer inneren Blechlage 25 des Dachpaneels verbunden. Bei dem dargestellten und insoweit bevorzugten Ausführungsbeispiel ist die Schiene 7 in einer Aussparung 26 der inneren Blechlage 25 vorgesehen. Der Innenraum 27 des Dachpaneels 3 ist ausgeschäumt. Im Querschnitt weist die durch die Schiene 7 gebildete Nut 10 eine T-Form auf. Im breiteren Nutbereich angrenzend zum Nutgrund ist ein Nutenstein 12 vorgesehen, der sich formschlüssig gegenüber den an am unteren Ende der Schiene 7 hervorstehenden Rippen 9 abstützt. Ferner liegen die äußeren Enden des Nutensteins 12 an mehr oder weniger vertikal verlaufenden Nutflanken 17,18 der T-Nut 10 an und werden dort bedarfsweise reibschlüssig gehalten.

Reichen Reibschluss und Formschluss nicht aus, um den Nutenstein 12 und damit die Montagevorrichtung 28, die in der Fig. 6 lediglich schematisch dargestellt ist, in der gewünschten Position zu halten, kann die Montagevorrichtung 28 wie in Fig. 6 dargestellt alternativ oder zusätzlich einen Gewindeabschnitt 29 und ein auf diesem angeordnetes Verspannmittel 30 aufweisen. Bei dem in der Fig. 6 dargestellten Ausführungsbeispiel ist das Vorspannmittel 30 eine Kontermutter, die verstellbar auf dem mit dem Nutenstein 12 verbundenen Gewindeabschnitt 29 aufgeschraubt ist. Durch Anziehen der Kontermutter wird zusätzlich eine kraftschlüssige Verbindung zwischen dem Nutenstein 12 und insbesondere der Montagevorrichtung 28 und der Schiene 7 erhalten. Dabei stützt sich die Montagevorrichtung 28 im Wesentlichen gegen die Schiene 7, insbesondere gegen die, die Öffnungsweite der Schiene 7 begrenzenden Rippen 9, ab. Zwischen dem Gewindeabschnitt 29 und der Kontermutter sollte auch im unbelasteten Zustand eine ausreichende Reibung gegeben sein, damit eine Drehung der Kontermutter auch zu einer Drehung des Nutensteins 12 beim Anziehen der Verbindung führt.

Würde auf die zusätzliche, zuvor beschriebene kraftschlüssige Verbindung verzichtet werden, so würde vorzugsweise die Montagevorrichtung keine zusätzliche Verschraubung aufweisen. Der Nutenstein würde dann lediglich durch Formschluss an den Rippen der Schiene und durch Formschluss an den seitlichen Flanken der T-Nut gehalten.

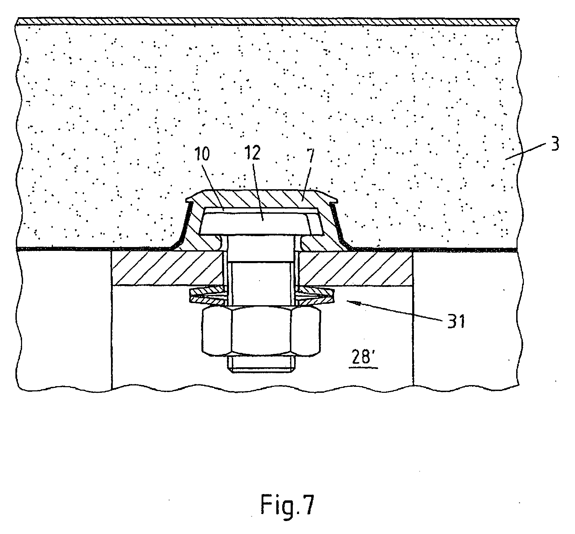

In der Fig. 7 ist eine weitere Ausführungsform der Montagevorrichtung 28' in der bereits beschriebenen Schiene 7 eines Dachpaneels 3 dargestellt. Bei diesem Ausführungsbeispiel ist ein Federmittel 31 hier in Form von zwei Tellerfedern vorgesehen, die weniger dazu dienen, eine kraftschlüssige Verbindung zwischen dem Nutenstein 12 und der Schiene 7 zu etablieren, als vielmehr die Entnahme des Nutensteins 12 aus der Schiene 7 zu erleichtern. Wenn der Nutenstein 12 so weit verdreht wird, dass die Längserstreckung des Nutensteins 12 parallel zur Längserstreckung der Schiene 7 ausgerichtet ist, so wird der Nutenstein 12 durch die Vorspannung des Federmittels 31 ohne weiteres Zutun aus der T-Nut 10 der Schiene 7 herausgezogen. Dabei wird der Nutenstein 12 entweder vollständig aus der Nut 10 entfernt oder aber wenigstens zwischen die einander gegenüberliegenden Rippen 9 der Schiene 7 gezogen. Im letztgenannten Fall ist ein Überdrehen des Nutensteins 12 ebenfalls verhindert und die Montagevorrichtung 28' kann auch dann ohne weiteres entfernt werden. Zusätzliche Anschlagflächen sind bei diesem Ausführungsbeispiel nicht erforderlich, können bedarfsweise aber vorgesehen sein.

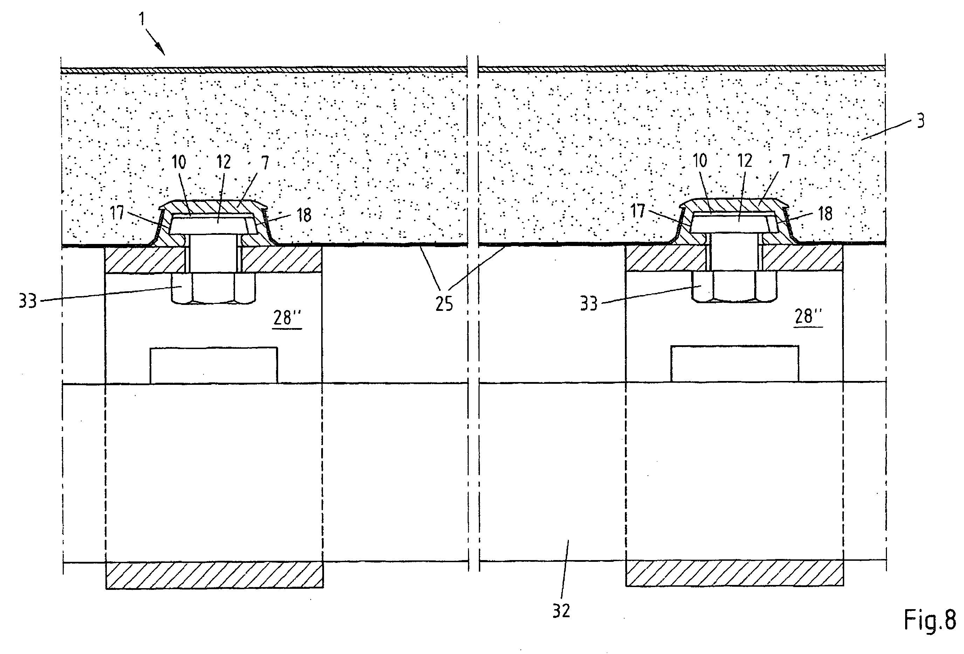

In der Fig. 8 ist ein Schnitt durch ein Dachpaneel 3 eines Kofferaufbaus 1 dargestellt, an dem als Zusatzeinrichtung 32 ein sogenanntes Fleischhangsystem montiert ist. Das Dachpaneel 3 weist eine bündig mit der Unterseite des Dachpaneels 3 ausgerichtete Schiene 7 auf wie sie bereits eingehend diskutiert worden ist. In der Schiene 7 ist eine Montagevorrichtung 28'' befestigt, die als Zusatzeinrichtung 32 ein Fleischhangsystem trägt, das im Wesentlichen durch das in der Fig. 8 lediglich schematisch dargestellte Rohr charakterisiert ist. Angezogen, also reibschlüssig gegen die seitlichen Flanken 17,18 der T-Nut 10 angestellt, wird der Nutenstein 12 über den schematisch dargestellten Schraubenkopf 33. Dieser könnte auch eine Reihe anderer aus dem Stand der Technik bekannter Formen aufweisen. Um ein Ausziehen des Nutensteins 12 problemlos zu ermöglichen, weist die Montagevorrichtung 28'' eine C-förmige Gestalt auf, deren vertikaler Abschnitt in Blickrichtung hinter dem Rohr des Fleischhangsystems vorgesehen ist.

## Patentansprüche

1. Kofferaufbau (1) eines Lastkraftwagens (L), Aufliegers (A) und/oder Anhängers, mit einem Dachpaneel (3) und wenigstens einer Montagevorrichtung (28,28',28'') zur Montage einer Zusatzeinrichtung (32) am Dachpaneel (3), wobei die Montagevorrichtung (28,28',28'') in wenigstens einer in das Paneel eingelassenen Schiene (7) montiert ist, wobei die Montagevorrichtung (28,28',28'') über einen in eine Nut der Schiene (7) eingreifenden Nutenstein (12,12') in der Schiene (7) montiert ist, und wobei die Nut der Schiene (7) eine zur Innenseite des Kofferaufbaus geöffnete T-Nut (10) ist, **dadurch gekennzeichnet, dass** der wenigstens eine Nutenstein (12,12') in der Ebene der T-Nut (10) zwei diagonal gegenüberliegende Abrundungen (19,20) aufweist, dass die Abrundungen (19,20) jeweils eine Anlagefläche (15,16) zur Anlage an eine innere Flanke (17,18) der T-Nut (10) definieren und dass die Anlageflächen (15,16) der Abrundungen (19,20) reibschlüssig an den inneren Flanken (17,18) der T-Nut (10) gehalten sind, so dass die wenigstens eine Montagevorrichtung (28,28',28'') reibschlüssig längs zur wenigstens einen Schiene (7) in der T-Nut (10) gehalten ist.

2. Kofferaufbau nach Anspruch 1,
**dadurch gekennzeichnet, dass** die Zusatzeinrichtung (32) ein Fleischhangsystem, ein Deckenverdampfer und/oder eine Trennwand ist.

3. Kofferaufbau nach Anspruch 1 oder 2,
**dadurch gekennzeichnet, dass** die Schiene (7) bündig in das Dachpaneel (3) eingelassenen ist.

4. Kofferaufbau nach Anspruch 1,
**dadurch gekennzeichnet, dass** der Nutenstein (12,12') in Längsrichtung länger als die Öffnungsweite der T-Nut (10) ist und dass der Nutenstein (12,12') in Querrichtung schmaler als die Öffnungsweite der T-Nut (10) ist.

5. Kofferaufbau nach einem der Ansprüche 1 bis 4,
**dadurch gekennzeichnet, dass** der wenigstens eine Nutenstein (12) in Auszugsrichtung federbelastet ist.

6. Kofferaufbau nach einem der Ansprüche 1 bis 5,
**dadurch gekennzeichnet, dass** der wenigstens eine Nutenstein (12) wenigstens eine mit der wenigstens einen Schiene (7) zusammenwirkende Anschlagfläche (21,22) zum Begrenzen der Drehung des Nutensteins (12') beim Lösen der wenigstens einen Montagevorrichtung in im Wesentlichen längs zur T-Nut (10) ausgerichteter Stellung des Nutensteins (12') aufweist.

7. Kofferaufbau nach einem der Ansprüche 1 bis 6,
**dadurch gekennzeichnet, dass** die wenigstens eine Montagevorrichtung (28) einen Gewindeabschnitt (29) und ein auf den Gewindeabschnitt (29) aufgeschraubtes Verspannmittel (30) zur kraftschlüssigen Montage der Montagevorrichtung (28) in der wenigstens einen Schiene (7) aufweist.

8. Kofferaufbau nach einem der Ansprüche 1 bis 7,
**dadurch gekennzeichnet, dass** sich die wenigstens eine Schiene (7) quer zum Dachpaneel (3) erstreckt.

## Claims

1. Box-type van body (1) of a lorry (L), semi-trailer (A) and/or trailer, with a roof panel (3) and at least one mounting device (28, 28', 28") for mounting an additional device (32) on the roof panel (3), wherein the mounting device (28, 28', 28") is mounted in at least one rail (7) embedded in the panel, wherein the mounting device (28, 28', 28") is mounted in the rail (7) via a slot nut (12, 12') engaging in a groove of the rail (7), and wherein the groove of the rail (7) is a T-slot (10) opened to the inside of the box-type van body, **characterised in that** the at least one slot nut (12, 12') in the plane of the T-slot (10) has two diagonally opposite roundings (19, 20), that the roundings (19, 20) in each case define a contact surface (15, 16) for contact with an inner flank (17, 18) of the T-slot (10) and that the contact surfaces (15, 16) of the roundings (19, 20) are held frictionally engaged on the inner flanks (17, 18) of the T-slot (10), such that the at least one mounting device (28, 28', 28") is held frictionally engaged longitudinally to the at least one rail (7) in the T-slot (10).

2. Box-type van body according to Claim 1, **characterised in that** the additional device (32) is a meat rack system, a roof evaporator and/or a partition wall.

3. Box-type van body according to Claim 1 or 2, **characterised in that** the rail (7) is embedded flush in the roof panel (3).

4. Box-type van body according to Claim 1, **characterised in that** the slot nut (12, 12') is longer in the longitudinal direction than the opening width of the T-slot (10) and that the slot nut (12, 12') is narrower in the transverse direction than the opening width of the T-slot (10).

5. Box-type van body according to any one of Claims 1 to 4, **characterised in that** the at least one slot nut (12) is spring-loaded in the extraction direction.

6. Box-type van body according to any one of Claims 1 to 5, **characterised in that** the at least one slot nut (12) has at least one contact surface (21, 22) interacting with the at least one rail (7) for limiting the rotation of the slot nut (12') when dismantling the at least one mounting device in the position of the slot nut (12') oriented substantially longitudinally to the T-slot (10).

7. Box-type van body according to any one of Claims 1 to 6, **characterised in that** the at least one mounting device (28) has a thread section (29) and a bracing means (30) screwed onto the thread section (29) for the non-positive mounting of the mounting device (28) in the at least one rail (7).

8. Box-type van body according to any one of Claims 1 to 7, **characterised in that** the at least one rail (7) extends transversely to the roof panel (3).

## Revendications

1. Structure de coffre (1) d'un camion (L), d'une semi-remorque (A) et/ou d'une remorque, pourvue d'un panneau de toiture (3) et au moins d'un dispositif de montage (28, 28', 28") destiné au montage d'un dispositif supplémentaire (32) sur le panneau de toiture (3), auquel cas le dispositif de montage (28, 28', 28") est monté dans au moins un rail (7) intégré dans le panneau, auquel cas le dispositif de montage (28, 28', 28") est monté dans le rail (7) par l'intermédiaire d'une clavette rainurée (12, 12') s'encliquetant dans une rainure du rail (7), et auquel cas la rainure du rail (7) est une rainure en T (10) ouverte vers le côté intérieur de la structure de coffre, **caractérisée en ce que** la au moins une clavette rainurée (12, 12') présente dans le plan de la rainure en T (10) deux arrondissements (19, 20) opposés en diagonal (19, 20), et que les arrondissements (19, 20) définissent à chaque fois une surface d'appui (15, 16) destinée à venir en appui sur un flanc intérieur (17, 18) de la rainure en T (10) et que les surfaces d'appui (15, 16) des arrondissements (19, 20) sont retenues par friction sur les flancs intérieurs (17, 18) de la rainure en T (10), de sorte que le au moins un dispositif de montage (28, 28', 28") est retenu par friction le long d'au moins un rail (7) dans la rainure en T (10).

2. Structure de coffre selon la revendication 1, **caractérisée en ce que** le dispositif supplémentaire (32) est un système permettant d'accrocher de la viande, un évaporateur plafonnier et/ou une paroi de séparation.

3. Structure de coffre selon la revendication 1 ou 2, **caractérisée en ce que** le rail (7) est intégré à fleur dans le panneau de toiture (3).

4. Structure de coffre selon la revendication 1, **caractérisée en ce que** la clavette rainurée (12, 12') est plus longue en direction longitudinale que la largeur d'ouverture de la rainure en T (10) et que la clavette rainurée (12, 12') est plus mince en direction transversale que la largeur d'ouverture de la rainure en T (10).

5. Structure de coffre selon une des revendications de 1 à 4, **caractérisée en ce que** la au moins une clavette rainurée (12) est sollicitée par ressort dans le sens d'extraction.

6. Structure de coffre selon une des revendications de 1 à 5, **caractérisée en ce que** la au moins une clavette rainurée (12) présente au moins une surface d'appui (21, 22) coopérant avec le au moins un rail (7) afin de limiter la rotation de la clavette rainurée (12') lors du desserrement du au moins un dispositif de montage d'une une position de la cavette rainurée (12') étant alignée essentiellement le long de la rainure en T (10).

7. Structure de coffre selon une des revendications de 1 à 6, **caractérisée en ce que** le au moins un dispositif de montage (28) présente un segment fileté (29) et un moyen de serrage (30) vissé sur le segment fileté (29) pour le montage par liaison de force du dispositif de montage (28) dans le au moins un rail (7).

8. Structure de coffre selon une des revendications de 1 à 7, **caractérisée en ce que** le au moins un rail (7) s'étend transversalement par rapport au panneau de toiture (3).
